# EUROPEAN PATENT SPECIFICATION

(11) **EP 3 358 961 B1**
(45) Date of publication and mention of the grant of the patent: **29.04.2020**
(21) Application number: 16779040.1
(22) Date of filing: 04.10.2016
(51) Int. Cl.: A23F 5/08, A23F 5/40

(54) **PROCESS FOR MICRONIZING COFFEE PARTICLES**
VERFAHREN ZUR MIKRONISIERUNG VON KAFFEETEILCHEN
PROCÉDÉ DE MICRONISATION DE PARTICULES DE CAFÉ

(30) Priority: 09.10.2015 EP 15189125
(43) Date of publication of application: 15.08.2018
(73) Proprietor: Société des Produits Nestlé S.A., 1800 Vevey (CH)
(72) Inventor: FRIES, Lennart, 1006 Lausanne (CH); REH, Christoph, 1066 Epalinges (CH); PALZER, Stefan, 1000 Lausanne 26 (CH); NIEDERREITER, Gerhard, 1800 Vevey (CH); MORA, Federico, 1110 Morges (CH)
(74) Representative: Lomholt, Stig Bredsted
(86) International application number: PCT/EP2016/073629
(87) International publication number: WO 2017/060215

(56) References cited:
- EP-A1- 2 659 783
- WO-A1-2012/009668
- WO-A1-2015/075535
- US-A- 3 652 292
- US-A- 3 697 288

## Description

### Field of the invention

The present invention relates to a process for micronizing coffee particles wherein coffee particles are micronized in an aqueous suspension.

### Background

Despite progress in aroma preservation technologies, soluble coffee is perceived by some consumers as lacking freshness and fresh brewed roast and ground coffee aroma. Some products have therefore been developed where fine ground roast and ground coffee is added to a soluble coffee powder in order to enhance taste and aroma. For reasons of sensory perception, roast and ground coffee powder with small particle size is desirable to avoid that the particles are perceived a gritty or sandy during consumption. However, due to their oil content, coffee particles get sticky when milled as coffee oil is squeezed out of pores to the particle surface. Dry grinding techniques at ambient temperature are therefore limited in terms of the obtainable particle size distribution. Furthermore, finely ground coffee particles added to pure soluble coffee preparations tends to form aggregates during milling and/or upon reconstitution in the cup. In consequence, sedimentation of these aggregates is observed in the form of dark flakes settling to the bottom of the cup, visible with the naked eye. The described phenomena are perceived as flaws or defects by the consumer and need to be overcome.

Micronization of coffee in concentrated aqueous phase (such as coffee extract) has been described previously, e.g. in GB1489166, DE3130346 and US3697288. US3652292 discloses the use of additives to prevent aggregation during wet milling of coffee. Additives, however, may be undesirable for regulatory reasons or due to consumer perception. Co-grinding of roasted coffee particles in a jet mill using pure soluble coffee powder as carrier is disclosed in US1214875 and EP2659783. By adding a carrier that absorbs coffee oil from the particle surfaces, stickiness of the product in the mill is avoided and aggregation in the final cup is reduced, but the required carrier mass fraction is significant (order of 50%), which negatively impacts process efficiency and mass fraction is significant (order of 50%), which negatively impacts process efficiency and flavor profile.

Methods were developed to address stability and dispersion of colloidal roast and ground coffee. US3652292 describes an instant coffee product comprising a dried soluble coffee extract and roast coffee constituents ground to a colloidal particle size having a pH of at most 5.2. The stabilization of colloidal roast coffee constituents against flocculation requires a regulation of the pH value of the colloidal constituents to values that lie in more acidic range than is found with normal coffee infusion. EP2659783 describes a process of forming a freeze-dried soluble coffee product wherein a milled and blended coffee intermediate is incorporated into a concentrated coffee extract either prior or after foaming and pre-freezing of the concentrated coffee extract. WO2012009668 describes a method for forming at least a portion of a beverage from a co-milled powdered composition, wherein an amount of co-milled powdered composition is combined with a fluid to produce at least a portion of a beverage. The co-milled powdered composition comprises at least one powdered ingredient having difficulty to dissolve or disperse that is co-milled with one or more dispersion or dissolving facilitator components. US3697288 discloses a method of producing colloidal dispersion of roast and ground coffee in water. The method requires vibration energy milling a water/roast and ground coffee slurry comprising at least 5 to 10 % by weight of roast and ground coffee. WO2015075535 describes a method for producing a roast and ground coffee powder where the roast and ground coffee is grinded in coffee oil.

There is a need for improved methods of producing micronized coffee particles which do not stick or aggregate when used, e.g. as ingredient in coffee products such as instant coffee products.

### Summary of the invention

The inventors have found that micronization of coffee particles in an aqueous suspension comprising dissolved water soluble coffee solids reduces aggregation and improves the stability of the micronized coffee particles in the suspension. Accordingly the invention relates to a process for micronizing coffee particles, the process comprising: a) preparing an aqueous suspension of coffee particles comprising 1-20% coffee particles and 0.1-30% dissolved water soluble coffee solids and with a total solids content of 40% or less; and b) micronizing the aqueous suspension of coffee particles comprising 1-20% coffee particles and 0.1-30% dissolved water soluble coffee solids and with a total content of 40% or less to an average particle size, d_{90,3}, of less than 50 micron to produce a suspension of micronized coffee particles wherein coffee particles in step a) are mixed with soluble coffee solids obtained by a separate extraction of coffee beans with water, and wherein steps a) and b) are conducted at a temperature of 5-50°C..

### Brief description of the drawings

Figure 1. Particle size distribution of roast and ground coffee used for the preparation of micronized coffee particles according to example 1.
Figure 2. The obtained apparent average particle size, d_{90,3} (x₉₀) as a function of the milling energy input, for the milling of different compositions for varying milling time as described in example 1.
Figure 3. Particle size distribution of dried pure soluble coffee preparations after reconstitution in water as described in example 1.
Figure 4. Particle size distribution of dried pure soluble coffee preparations after reconstitution in water as described in example 2.
Figure 5. Sedimentation of particles in different samples as a function of time. Details
Figure 6. Filter paper after filtration of coffee beverages prepared by reconstitution of pure soluble coffee powder comprising micronized coffee particles. Details are given in example 5.

### Detailed description of the invention

Coffee beans are beans, or seeds, from the coffee plant, e.g. from the *Coffea arabica* variety, also called Arabica coffee, or the *Coffea canephora* variety, also called Robusta coffee. By coffee particles are meant particles that do not dissolve in water and are produced from coffee beans by breaking the coffee beans into smaller pieces in any suitable way, e.g. by crushing, milling, grinding, e.g. roller grinding, or the like.

By water soluble coffee solids are meant water soluble compounds, excluding water, which has been extracted from coffee beans, typically using water and/or steam. Methods for extraction of soluble solids from coffee beans are well known in the art of soluble coffee production and any suitable method may be used.

Roast and ground coffee beans are coffee beans that have been subjected to the processes of roasting and grinding commonly used in the field of coffee production. Roasting of green, also called raw, coffee beans may be performed in any suitable way to produce aroma notes associated with roast coffee. Suitable roasting methods are well known in the art. Similarly, methods and equipment for grinding of coffee beans are well known in the art and any suitable method may be used to produce roast and ground coffee beans according to the invention.

Particle sizes of coffee particles as discussed in this application may be measured by laser diffraction technologies, e.g. using commercial instruments such as Malvern Mastersizer 2000 (Malvern Instruments, Malvern, UK). In this application the so-called d_{90,3} (sometimes called x₉₀) size is used as characteristic measure of the coffee particle size distribution in a preparation. In a given sample, 90% of the particle mass or volume belongs to particles smaller than d_{90,3}. We refer to the d_{90,3} rather than to the mean particle size, since it was found that for mouthfeel consideration the largest particle fraction is of dominant influence.

Amounts and ranges given in percent (%) in this specification refer to percent by weight (weight/weight) unless otherwise specified.

According to the method of the present invention, an aqueous suspension of coffee particles is prepared comprising 1-30% coffee particles, preferably 1-20%, more preferably 2-20% coffee particles. The suspension further comprises 0.1-30% dissolved water soluble coffee solids, preferably 0.1-10%, more preferably 0.5-5% dissolved water soluble coffee solids. The total solids content of the suspension, including both coffee particles and dissolved water soluble coffee solids, is 40% or less, such as e.g. 1.1-40%, preferably 30% or less, such as e.g. 1.1-30%, more preferably 25% or less, such as e.g. 2.5-25% or 3-25%. The suspension may be prepared in any suitable way, e.g. by mixing coffee particles with an aqueous extract of coffee beans comprising the desired amount of dissolved water soluble coffee solids; by mixing coffee particles and concentrated, e.g. dried, water soluble coffee solids into an aqueous liquid such as water, or in any other suitable way. The order of the addition of the components is not particularly critical. A suitable mixing device, e.g. a high shear mixer, may be used to ensure proper suspension of the coffee particles and dissolution of the water soluble coffee solids. The coffee particles used to prepare the aqueous suspension preferably have a particle size, d_{90,3}, of 100 micron or more. In a preferred embodiment, the coffee particles are particles of roast and ground coffee beans, but green coffee beans, untreated or treated by other methods, may also be used, depending on the desired use and characteristics of the micronized coffee particles.

The water soluble coffee solids may be obtained by any suitable way. Typically, they may be extracted from coffee beans by water and/or steam as usually done for the production of soluble, or instant, coffee. Such methods are well known in the art. The water soluble coffee solids may be preferably be obtained from roast and ground coffee beans, but green coffee beans, untreated or treated by other methods, may also be used. The soluble coffee solids are preferably obtained by a separate extraction of coffee beans with water. Hereby is meant that the water soluble coffee solids are not obtained from the coffee particles used to prepare the suspension or from the coffee beans used to prepare these coffee particles.

All or part of the water soluble coffee solids may preferably be obtained as a side product from water decaffeination of coffee beans. Water decaffeination is well known in the art, e.g. from US patent No. 5,208,056. Caffeine is removed from green coffee beans by extracting the coffee beans with water, or with a coffee extract from which caffeine has been removed, and the resulting extract is treated with an adsorbent with a high specificity for caffeine. The solids left in the extract after caffeine has been adsorbed may then be returned to the green coffee beans. The caffeine is desorbed from the adsorbent and can used for other purposes. However, most adsorbents will also adsorb a number of other green coffee compounds such as aroma precursor compounds and polyphenols so when the caffeine is desorbed from the adsorbent it is not pure and needs to be purified afterwards to be useful as an ingredient. The impurities removed are usually discarded. WO 2011/011418 discloses a crude caffeine complex obtained as the un-purified complex of caffeine and other compounds remaining after removal of caffeine from coffee beans, and the use of such a crude complex as an ingredient. Such a side product may be used as a source of water soluble coffee solids in the method of the present invention. Caffeine may preferably be removed from this side product before the use in the present invention. A convenient way of obtaining a side product low in caffeine is by using a desorption method that preferentially desorbs compounds other than caffeine, such as e.g. polyphenols. One such method is disclosed in WO 2014/072282.

The aqueous suspension of coffee particle is micronized to a particle size, d_{90,3}, of less than 50 micron to produce a suspension of micronized coffee particles. In a preferred embodiment the suspension of coffee particle is micronized to a particle size, d_{90,3}, of 1-50 micron, such as 5-50 micron, more preferably 10-50 micron. By micronization is meant a physical size reduction to the desired particle size below 50 micron. Any methods suitable for micronizing coffee particles in an aqueous suspension may be used, such as e.g. ball milling, bead milling, stirred media milling, roller refining, and/or impact milling.

The process of the present invention is preferably performed under conditions minimising the extraction of soluble material from the coffee particles into the aqueous liquid of the suspension. In a preferred embodiment steps a) and b) are conducted at a temperature of 5-50°C, more preferably at a temperature of 5-40°C.

The suspension of micronized coffee particles may be concentrated by removal of water, e.g. by evaporation, filtration, drying such as spray drying or freeze drying, if a concentrated or dry preparation is desired. For example, the suspension may be dried to produce a powder which is useful as an ingredient in food or beverage products, e.g. coffee beverage products such as instant coffee.

In a further aspect, the present invention relates to a process for producing a coffee product wherein the micronized coffee particles obtained by the process of the invention are mixed with an extract of coffee beans. The extract of coffee beans with which the micronized coffee particles are mixed, may be any extract suitable for producing the desired coffee product. In a preferred embodiment the extract is produced by extraction of coffee beans with water. The coffee product is preferably a coffee beverage product, e.g. an instant coffee product. By a coffee beverage product is meant a coffee beverage which is immediately ready for consumption, or a product which is useful for the preparation of a coffee beverage product, e.g. by the addition of water, such as an instant coffee product. The coffee product may be in any suitable form, e.g. in liquid or dried form. In a preferred embodiment, the micronized coffee particles are mixed with an extract of coffee beans such that the micronized coffee particles constitute 2-50% of the dry solids of the mixture. For example, if the desired coffee beverage product is a dry instant coffee product the micronized coffee may be mixed into a coffee extract produced by conventional methods of instant coffee production, just before drying of the product, e.g. by spray drying or freeze drying, to produce the final instant coffee product comprising micronized coffee. Accordingly, in a preferred embodiment of the invention the micronized coffee particles are mixed with an extract of coffee beans and the mixture is subsequently dried to produce a dried coffee product. The coffee product may also be in the form of a liquid, so-called ready-to-drink, product which can be consumed directly as it is, or in the form of a liquid concentrate which can be consumed after dilution with water, milk, and/or any other suitable liquid. A liquid concentrate may e.g. be used in a vending machine for suitable liquid. A liquid concentrate may e.g. be used in a vending machine for preparation of a beverage on demand. Furthermore, a coffee product may be in the form of a capsule containing coffee to be used for preparation of a coffee beverage in a machine by injection of hot or cold water into the capsule. A capsule may e.g. contain instant coffee and micronized coffee produced by the method of the invention.

In a preferred embodiment, the present invention relates to a method of producing a dried coffee product, the process comprising: a) preparing an aqueous suspension of coffee particles comprising 1-20% coffee particles and 0.1-30% dissolved water soluble coffee solids and with a total solids content of 40% or less; b) micronizing the aqueous suspension of coffee particles comprising 1-20% coffee particles and 0.1-30% dissolved water soluble coffee solids and with a total solids content of 40% or less to an average particle size, d_{90,3}, of less than 50 micron to produce a suspension of micronized coffee particles, wherein coffee particles in step a) are mixed with soluble coffee solids obtained by a separate extraction of coffee beans with water, and wherein steps a) and b) are conducted at a temperature of 5-50°C; c) mixing the micronized coffee particles with an extract of coffee beans; and d) drying the mixture of micronized coffee particles and extract of coffee beans to produce a dried coffee product.

### EXAMPLES

### Example 1: Batch micronization in aqueous phase at 6.5% TS (Total Solids) for retail coffee beverage containing 10% micronized coffee particles (MRC), spray dried

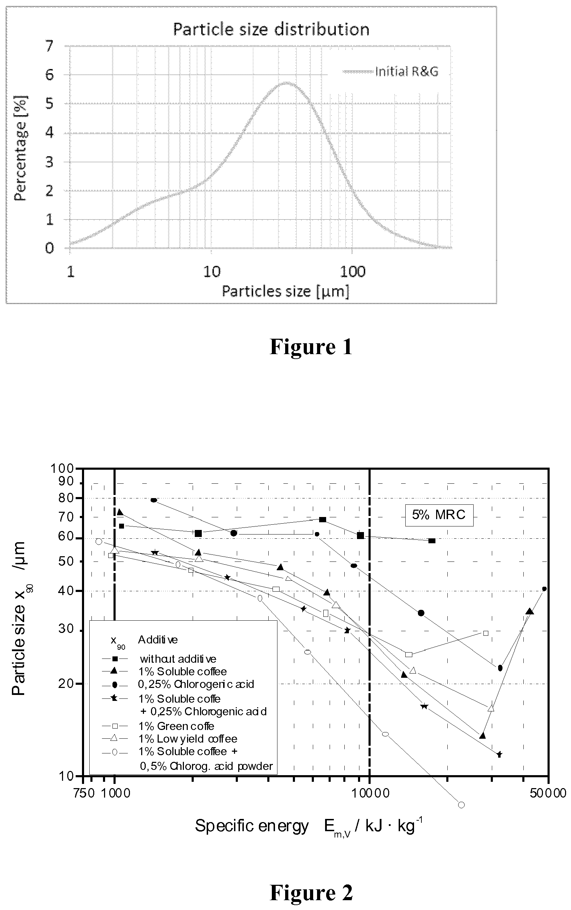

Robusta coffee (origin Vietnam) was roasted to a CTN of 70 and ground with a 3 stage roller grinder to a particle size of d_{90,3} = 130 µm (see Fig. 1). All particle size distributions mentioned in this and the following examples were measured by laser diffraction (Malvern Mastersizer 2000, Fraunhofer algorithm, dispersion in MCT oil). These pre-ground coffee particles were mixed into water at a concentration of 5 wt%. 1 wt% powdered coffee extract (PSC), obtained by water extraction of roast and ground coffee, and 0.5 % powdered coffee extract rich in chlorogenic acid, obtained as a side product from water decaffeination of green coffee, were added to the preparation. A homogeneous mixture was prepared with the help of a high shear mixer (Ultraturrax, 5 min at 10000 rpm). A laboratory scale planetary ball mill (Retsch PM200) was used to micronize the coffee suspension. For this purpose, ceramic beads volume. The coffee suspension was filled into the milling chamber, before sealing it tightly. The mill was run at 500 rpm for 2, 5, 10 and 30 min in order to monitor the size reduction progressively, as shown in Fig. 2.

As reference for comparison different formulations were tested, produced as described above, except as indicated (see Fig. 2):
1. A sample containing only 5% coffee particles in water, i.e. without any additives (black line with closed square symbols). It can be seen that an equilibrium between the milling process and aggregation phenomena is observed, resulting in no decrease of the particle size distribution beyond a d_{90,3} of 60 µm.
2. A sample containing only coffee particles and 1% PSC, i.e without adding extract rich in chlorogenic acids (black line with full triangle-shaped symbols). PSC enables a stable suspension of primary particles at a d_{90,3} of less than 20 µm. At very high energy input, the cohesive forces between fines dominate and the PSC is not able to prevent aggregation, which is expressed by an increase of the apparent d_{90,3}.
3. Samples containing 1% green coffee extract or 1% low yield coffee extract added, i.e. without addition of extract rich in chlorogenic acid, but with higher surfactant concentration than 2. (black line with open square symbols, black line with open triangle symbols). No advantage in stability of the suspension is observed compared to case 2.
4. A sample with 0.25% purified chlorogenic acid powder added, i.e. no addition of coffee extract (black line with full round symbols). The chlorogenic acid alone is not effective as stabilizer for MRC particles.
5. A sample with 1% PSC and additionally 0.25% purified chlorogenic acid added, i.e. a combination of cases 2 and 4 (black line with star-shaped symbols). This formulation is successfully stabilizing MRC particles, but no significant advantage over the addition of PSC alone (case 2) is observed.
6. The performance of the stabilizer according to case 2 plus an additional 0.5 % of the coffee extract enriched in chlorogenic acid is shown by a black line with open round symbols. A stable suspension of micronized coffee with a d_{90,3} of less than 10 µm is achieved.

Stabilized suspensions of MRC in water (case 2 and case 6) were mixed with further pure soluble coffee powder to reach a coffee concentration of 30 % TS and a ratio of PSC/MRC (dry matter) equal to 9/1. A Niro Minor spray dryer was then used to dry the mixture to produce dried powders of soluble coffee containing 10 wt% MRC.

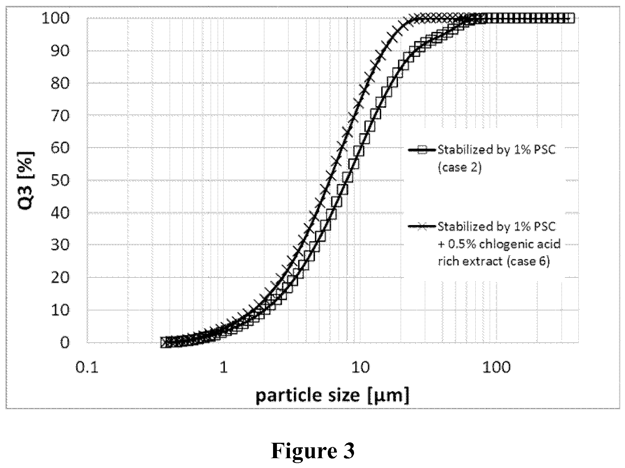

After reconstitution in a cup (2 g powder dissolved in 150 ml boiling water), the particle size distribution was measured again in order to quantify aggregation effects after reconstitution. As shown in Fig. 3, the suspension of MRC particles is maintained after spray drying and reconstitution. No significant increase of the d_{90,3} is observed, with absolute values of 15 µm (case 6) and 25 µm (case 2).

### Sedimentation test

Beverage samples at 10.3% MRC content were prepared by reconstituting 2 g of powder with 150 ml Vittel water at T=25°C. A sedimentation test was done by measuring the mass of sediments in the cup on settling onto a submersed plate during 5 min settling time using a sedimentation balance (Mettler Toledo XP404S Excellence Plus with Density Determination Kit, Balance Link Software V 4.02). 5 repetitions were performed for each measurement. For comparison, a commercial coffee sample comprising MRC (Kenco Millicano) is represented as well. The Kenco product containing 15% MRC was mixed with PSC to obtain the same MRC concentration (10%) as the cases described above. Based on continuous and quantitative measurement of particle sedimentation in the cup with the help of the sedimentation balance, the stability of the dispersion of the micronized particles in the retail beverage preparation can be evaluated.

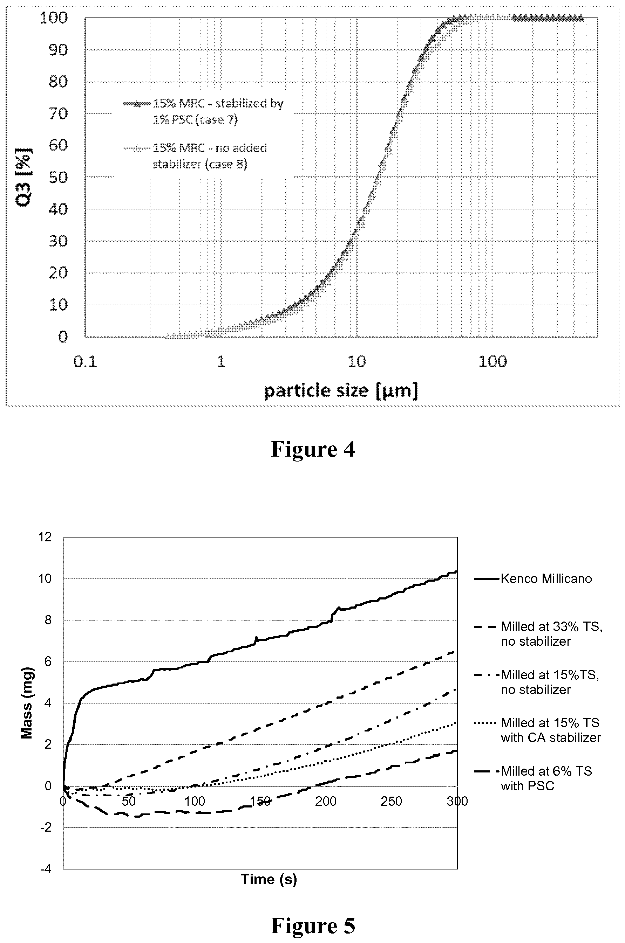

The results of the sedimentation test are shown in Figure 5, comparing the sedimentation of the sample according to the current invention (case 2: milled at 6% TS using PSC as stabilizer) to a commercial Kenco Millicano product. While only a very low increase of the sedimented coffee particle mass of 2 mg in five minutes is observed for the sample according to case 2, meaning that MRC does almost not settle within 5 min time, the commercial Kenco Millicano sample shows an initially steep increase of the sediment mass, indicating the deposition of aggregates. After that, a slight but continuous increase of the mass of sediments is observed, reaching a total of 10 mg after 5 minutes. Average mass of sediments and standard deviation of the test results are summarized in Table 1.

### Example 2: Continuous micronization in aqueous phase at 16% TS for retail coffee beverage containing 10% MRC, spray dried

Robusta coffee (origin Vietnam) was roasted to a CTN of 70 and ground with a 3 stage roller grinder to a particle size of d_{90,3} = 130 µm (see Fig. 1). 5 kg of these pre-ground coffee particles were mixed into 25 L of water. 0.3 kg powdered coffee extract (PSC) was added as stabilizer to the preparation (case 7). In parallel, a second batch of the same mix was prepared, with the only difference of not adding 0.3 kg PSC (case 8). From both preparations homogeneous mixtures were prepared with the help of a high shear mixer (Ystral). After that, each mix was separately fed to a wet bead mill (stirred media mill Hosokawa Alpine Hydro 90AHN). Ceramic beads (ZrO₂, 1.2 mm in size) were applied to grind the coffee suspension in two passes (2500 rpm, 20 L/h throughput). After this wet milling process coffee suspensions with a particle size distributions characterized by a d_{90,3} of 29 µm (case 7) and 41 µm (case 8), respectively, were obtained.

From both suspensions of micronized coffee in water, 1.5 kg were separately mixed with 4.5 kg of aqueous extract of roast and ground coffee beans, obtained by a standard process for producing soluble coffee, with a solids concentration of 50%, and then the mixture was spray-dried (NIRO SD-6.3-N) at 160°C to produce dried powders of soluble coffee containing 10 wt% MRC. The powders were used to prepare coffee beverages by filling 2 g of beverage powder into a cup and adding 150 ml of boiling water.

After reconstitution in the cup, the particle size distributions were measured again in order to quantify aggregation effects after reconstitution. As shown in Fig. 4, the suspensions of MRC particles were maintained after spray drying and reconstitution. No significant increase of the d_{90,3} was observed, with the absolute values being at 32 µm (case 7) and 36 µm (case 8), respectively.

The sedimentation test described in Example 1 above was also performed for the samples according to case 7 and 8. It can be seen in Figure 5 that for both cases a slow and continuous increase of the mass of sediments is recorded. The performance of the sample with stabilizer (case 7 - total mass after five minutes: 3 mg) is better than the corresponding sample without stabilizer (case 8 - total mass after five minutes: 4.6 mg).

### Example 3: Continuous micronization in aqueous phase at 16% TS for retail coffee beverage containing 15% MRC, freeze dried

The same process as described in example 2, case 7, was carried out to obtain a suspension of micronized coffee particles in water.

From this suspension 2.68 kg was mixed with 4.5 kg water extract of roast and ground coffee beans, obtained by a standard process for producing soluble coffee, with a solids concentration of 50%, the mixture was filled on a metal tray and then freeze-dried at - 40°C to produce a dried powder of soluble coffee containing 15 wt% MRC. The freeze dried powder was used to prepare coffee beverages by filling 2 g of beverage powder into a cup and adding 150 ml of boiling water. After reconstitution in the cup, the particle size distributions were measured again in order to quantify aggregation effects after reconstitution. The suspension of MRC particles was maintained after freeze drying and reconstitution. No significant increase of the d_{90,3} was observed, with the absolute values being at 40 µm.

### Example 4: Continuous micronization in aqueous phase at 33% TS for retail coffee beverage containing 10% MRC, spray dried

Robusta coffee (origin Vietnam) was roasted to a CTN of 70 and ground with a 3 stage roller grinder to a particle size of d_{90,3} = 130 µm (see Fig. 1). 1 kg of these pre-ground coffee particles were mixed with 20 kg of coffee extract at TS 50 % and 12.5 kg of water, giving a suspension with 33% coffee solids (case 9). From this preparation a homogeneous mixture was prepared with the help of a high shear mixer (Ystral). After that, the mix was fed to a wet bead mill (stirred media mill Hosokawa Alpine Hydro 90AHN). Ceramic beads (ZrO₂, 1.2 mm in size) were applied to grind the coffee suspension in two passes (2500 rpm, 20 L/h throughput). After this wet milling process a coffee suspension with a particle size distribution characterized by a d_{90,3} of 35 µm was obtained.

The advantage of this approach over examples 1 and 2 is that the suspension coming from the bead mill can directly be used as feed for the spray tower, without further mixing step. A NIRO SD-6.3-N spray dryer was used operating at at 160°C to produce dried powder of soluble coffee containing 10 wt% MRC. The obtained powder was used to prepare coffee beverages by filling 2 g of beverage powder into a cup and adding 150 ml of boiling water.

The sedimentation test described in Example 1 above was also performed for the sample according to case 9. It can be seen in Figure 5 that a slow and continuous increase of the mass of sediments is recorded. After five minutes of settling time, 6 mg of sediments are recorded. This shows that the sample milled at 33% TS (case 9) possesses still a good stability with respect to particle sedimentation.

### Example 5:

4 different dried coffee beverage compositions were produced as indicated below, the samples were reconstituted as described in example 1, and the reconstituted beverages were passed through filter paper (specify paper) and observed visually for appearance of aggregated coffee particles as black spots on the filter paper.

### Sample 1:

*Preparation:* Coffee particles were milled in a dry state with the help of a cryogenic impact mill (Hosokawa Alpine 160 UPZ) down to a size of d_{90,3} = 50 µm. The micronized coffee powder was then mixed into a concentrated coffee extract to obtain a suspension with the composition 66% water, 30% soluble coffee solids, 3% MRC. A fine dispersion of MRC was obtained with the help of a high shear mixer (Ultraturrax). A Niro Minor spray dryer was then used to dry the mixture to produce dried powders of soluble coffee containing 10 wt% MRC.

*Appearance of aggregates:* Black spots consisting of aggregated MRC particles that were formed in the cup after reconstitution are retained on the filter paper. Their size is approximately in the range of 100 - 500 µm.

### Sample 2:

*Preparation:* Pre-ground coffee particles were produced as described in Example 1. 1 kg of these pre-ground coffee particles were mixed with 20 kg of coffee extract at TS 50 % and 6 kg water, giving a suspension with 41% coffee solids. From this preparation a homogeneous mixture was prepared with the help of a high shear mixer (Ystral). After that, the mix was fed to a wet bead mill (stirred media mill Hosokawa Alpine Hydro 90AHN). Ceramic beads (ZrO₂, 1.2 mm in size) were applied to grind the coffee suspension in two passes (2500 rpm, 20 L/h throughput). After this wet milling process a coffee suspension with a particle size distribution characterized by a d_{90,3} of 40 µm was obtained.

*Appearance of aggregates:* Black spots consisting of aggregated MRC particles that were formed in the cup after reconstitution are retained on the filter paper. Their size is approximately in the range of 100 - 200 µm.

### Sample 3:

*Preparation:* A powdered beverage composition was prepared as described in Example 3, case 7.

*Appearance of aggregates:* No aggregates visible with the naked eye are retained on the filter paper.

### Sample 4:

*Preparation:* A powdered beverage composition was prepared as described in Example 4, case 9.

*Appearance of aggregates:* Some darker spots, but no aggregates visible with the naked eye are retained on the filter paper

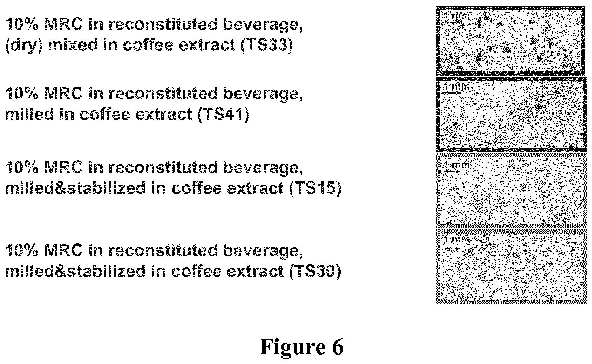

Figure 6 shows pictures of the filter paper for each sample. Mixing of dry micronized coffee particles into coffee extract before spray drying leads to the formation of aggregates in the final cup, which appear as black spots on the filter paper. The same problem is observed for beverages made with coffee particles micronized in aqueous phase with a bead mill at elevated total solids concentration (such as 42%). In contrast to that, no visible aggregates are found for the samples produced as described above (cases 7 and 9).

## Claims

1. A process for micronizing coffee particles, the process comprising:
a) preparing an aqueous suspension of coffee particles comprising 1-20% coffee particles and 0.1-30% dissolved water soluble coffee solids and with a total solids content of 40% or less; and
b) micronizing the aqueous suspension of coffee particles comprising 1-20% coffee particles and 0.1-30% dissolved water soluble coffee solids and with a total solids content of 40% or less to an average particle size, d_{90,3}, of less than 50 micron to produce a suspension of micronized coffee particles;
wherein coffee particles in step a) are mixed with soluble coffee solids obtained by a separate extraction of coffee beans with water, and wherein steps a) and b) are conducted at a temperature of 5-50°C.

2. The process of claim 1 wherein the aqueous suspension prepared in step a) comprises 0.1-5% dissolved water soluble coffee solids.

3. The process of claims 1 and 2, wherein the coffee particles used to prepare the aqueous suspension in step a) are particles of roast and ground coffee beans.

4. The process of any one of the preceding claims, wherein the aqueous suspension prepared in step a) comprises 0.1-5% dissolved water soluble coffee solids obtained as a side product from water decaffeination of coffee beans.

5. The process of any one of the preceding claims, wherein the total solids content of the aqueous suspension prepared in step a) is 3-25%.

6. The process of any one of the preceding claims, the coffee particles used to prepare the aqueous suspension in step a) has an average particle size, d90,3, of 100 micron or more.

7. The process of any one of the preceding claims further comprising concentrating the suspension of micronized coffee particles by removing water.

8. A process for producing a coffee product wherein the micronized coffee particles obtained by the process of any one of the preceding claims are mixed with an extract of coffee beans.

9. The process of claim 8, wherein the micronized coffee particles are mixed with an extract of coffee beans such that the micronized coffee particles constitutes 2-50% of the dry solids of the mixture.

10. The process of any one of claims 8 and 9 further comprising drying the mixture of micronized coffee particles and extract of coffee beans to produce a dried coffee product.

## Patentansprüche

1. Verfahren zum Mikronisieren von Kaffeeteilchen, wobei das Verfahren umfasst:
a) Zubereiten einer wässrigen Kaffeeteilchensuspension, umfassend 1-20 % Kaffeeteilchen und 0,1-30 % gelöste wasserlösliche Kaffeefeststoffe und mit einem Gesamtfeststoffgehalt von 40 % oder weniger; und
b) Mikronisieren der wässrigen Kaffeeteilchensuspension, umfassend 1-20 % Kaffeeteilchen und 0,1-30 % gelöste wasserlösliche Kaffeefeststoffe und mit einem Gesamtfeststoffgehalt von 40 % oder weniger, zu einer durchschnittlichen Teilchengröße, d_{90,3}, von weniger als 50 Mikrometern, um eine Suspension mikronisierter Kaffeeteilchen herzustellen;
wobei Kaffeeteilchen in Schritt a) mit löslichen Kaffeefeststoffen, die durch eine separate Kaffeebohnenextraktion mit Wasser erhalten werden, gemischt werden, und wobei Schritte a) und b) bei einer Temperatur von 5-50 °C ausgeführt werden.

2. Verfahren nach Anspruch 1, wobei die wässrige Suspension, die in Schritt a) zubereitet wird, 0,1-5 % gelöste wasserlösliche Kaffeefeststoffe umfasst.

3. Verfahren nach Anspruch 1 und 2, wobei die Kaffeeteilchen, die zum Zubereiten der wässrigen Suspension in Schritt a) verwendet werden, Teilchen gerösteter und gemahlener Kaffeebohnen sind.

4. Verfahren nach einem der vorstehenden Ansprüche, wobei die wässrige Suspension, die in Schritt a) zubereitet wird, 0,1-5 % gelöste wasserlösliche Kaffeefeststoffe, die als Nebenprodukt bei der Wasserentkoffeinierung von Kaffeebohnen erhalten werden, umfasst.

5. Verfahren nach einem der vorstehenden Ansprüche, wobei der Gesamtfeststoffgehalt der wässrigen Suspension, die in Schritt a) zubereitet wird, 3-25 % beträgt.

6. Verfahren nach einem der vorstehenden Ansprüche, wobei die Kaffeeteilchen, die zum Zubereiten der wässrigen Suspension in Schritt a) verwendet werden, eine durchschnittliche Teilchengröße, d90,3, von 100 Mikrometern oder mehr aufweisen.

7. Verfahren nach einem der vorstehenden Ansprüche, ferner umfassend Konzentrieren der Suspension mikronisierter Kaffeeteilchen durch Entfernen von Wasser.

8. Verfahren zum Herstellen eines Kaffeeprodukts, wobei die mikronisierten Kaffeeteilchen, die durch das Verfahren nach einem der vorstehenden Ansprüche erhalten werden, mit einem Kaffeebohnenextrakt gemischt werden.

9. Verfahren nach Anspruch 8, wobei die mikronisierten Kaffeeteilchen mit einem Kaffeebohnenextrakt gemischt werden, sodass die mikronisierten Kaffeeteilchen 2-50 % der trockenen Feststoffe der Mischung darstellen.

10. Verfahren nach einem der Ansprüche 8 und 9, ferner umfassend Trocknen der Mischung aus mikronisierten Kaffeeteilchen und Kaffeebohnenextrakt, um ein getrocknetes Kaffeeprodukt herzustellen.

## Revendications

1. Procédé de micronisation de particules de café, le procédé comprenant :
a) la préparation d'une suspension aqueuse de particules de café comprenant 1 à 20 % de particules de café et 0,1 à 30 % de solides de café hydrosolubles dissous et avec une teneur totale en solides de 40 % ou moins ; et
b) la micronisation de la suspension aqueuse de particules de café comprenant 1 à 20 % de particules de café et 0,1 à 30 % de solides de café hydrosolubles dissous et avec une teneur totale en solides de 40 % ou moins jusqu'à une taille moyenne de particules, d_{90,3}, inférieure à 50 micromètres pour produire une suspension de particules de café micronisées ;
dans lequel les particules de café à l'étape a) sont mélangées à des solides solubles de café obtenus par une extraction indépendante de grains de café avec de l'eau, et dans lequel les étapes a) et b) sont effectuées à une température de 5 à 50 °C.

2. Procédé selon la revendication 1, dans lequel la suspension aqueuse préparée à l'étape a) comprend 0,1 à 5 % de solides de café hydrosolubles dissous.

3. Procédé selon les revendications 1 et 2, dans lequel les particules de café utilisées pour préparer la suspension aqueuse à l'étape a) sont des particules de grains de café torréfié et moulu.

4. Procédé selon l'une quelconque des revendications précédentes, dans lequel la suspension aqueuse préparée à l'étape a) comprend 0,1 à 5 % de solides de café hydrosolubles dissous obtenus en tant que produit secondaire provenant d'une décaféination à l'eau de grains de café.

5. Procédé selon l'une quelconque des revendications précédentes, dans lequel la teneur totale en solides de la suspension aqueuse préparée à l'étape a) va de 3 à 25 %.

6. Procédé selon l'une quelconque des revendications précédentes, les particules de café utilisées pour préparer la suspension aqueuse à l'étape a) ont une taille moyenne de particules, d90,3, de 100 micromètres ou plus.

7. Procédé selon l'une quelconque des revendications précédentes comprenant en outre la concentration de la suspension de particules de café micronisées par élimination d'eau.

8. Procédé de production d'un produit de café dans lequel les particules de café micronisées obtenues par le procédé selon l'une quelconque des revendications précédentes sont mélangées à un extrait de grains de café.

9. Procédé selon la revendication 8, dans lequel les particules de café micronisées sont mélangées à un extrait de grains de café de telle sorte que les particules de café micronisées constituent 2 à 50 % des solides secs du mélange.

10. Procédé selon l'une quelconque des revendications 8 et 9 comprenant en outre le séchage du mélange de particules de café micronisées et d'extrait de grains de café pour produire un produit de café séché.
